# EUROPEAN PATENT SPECIFICATION

(11) **EP 3 839 272 B1**
(45) Date of publication and mention of the grant of the patent: **23.08.2023**
(21) Application number: 20213144.7
(22) Date of filing: 10.12.2020
(51) Int. Cl.: F16B 5/02, B60R 13/02, F16B 5/06, F16B 21/07, F16B 21/08

(54) **A FIXING AND AN ASSEMBLY COMPRISING THE SAME**
BEFESTIGUNG UND ANORDNUNG DAMIT
FIXATION ET ENSEMBLE LA COMPRENANT

(30) Priority: 18.12.2019 EP 19217699; 22.10.2020 EP 20203424
(43) Date of publication of application: 23.06.2021
(73) Proprietor: Illinois Tool Works INC., Glenview, IL 60025 (US)
(72) Inventor: SAVI, Massimo, Glenview, Illinois 60025 (US); HANSON, Niklas, Glenview, Illinois 60025 (US)
(74) Representative: HGF

(56) References cited:
- WO-A1-2015/076892
- DE-U1- 9 205 186
- FR-A1- 2 886 691
- JP-B2- 3 787 327

## Description

### TECHNICAL FIELD OF INVENTION

The invention relates to a fixing, for example a bushing. In one example, the invention relates to a self-centering fixing. The invention also relates to an assembly comprising a panel and a fixing secured thereto.

### BACKGROUND

FR 2886691 discusses a mounting clip for motor vehicle having a collar forming part with a central core and elastically deformable units projecting from the core for taking support on an inner surface of hole so that the clip radially displaces with respect to the axis of hole.

### BRIEF SUMMARY OF THE DISCLOSURE

Viewed from a first aspect, the present invention provides a fixing comprising: a head; a body extending from the head to a distal end along a first axis; a resiliently deformable retaining arm configured to deform upon insertion of the body into a hole of a panel, such that, in use, the head and the retaining arm abut opposed first and second sides of the panel so as to secure the fixing to the panel, and a resiliently deformable leg extending from a distal position on the body towards the head and configured, in use, to abut an inner surface of the hole and biased to urge the fixing away from the inner surface. Upon application of a lateral force to the fixing, the leg is configured to deform to allow the body to move laterally within the hole.

Thus, the present invention provides a fixing that is able to accommodate greater tolerances on the final position of each individual fixing within a panel, as the deformable legs allow the fixing to move laterally within a hole to accommodate poorly placed fasteners. A further advantage of the present fixing is the ability to use a single fixing for more than one hole-size. It would be apparent that in some cases the fixing can be designed for a particular hole size and panel thickness.

The retaining arm may extend from the body. The retaining arm may comprise a first portion extending in first direction and a second portion connected to the first portion and extending in a second direction different to the first direction.

The leg may extend from the body in a substantially parallel direction to the second direction.

The retaining arm may have a tapered profile. The tapered profile may narrow away from the body.

The fixing may comprise a plurality of resiliently deformable retaining arms. The plurality of retaining arms may be spaced around the body. The plurality of retaining arms may be spaced equally around the body.

The leg may comprise an arcuate profile.

Upon application of a lateral force to the fixing, the leg may be configured to deform into the channel to allow the body to move laterally within the hole. The leg may be configured to deform by 2mm. The leg may be configured to deform by at least 2mm.

The fixing may comprise a plurality of resiliently deformable legs. The plurality of legs may be spaced equally around the body.

The body may comprise a channel for receiving at least part of a fastener. The body may be configured to engage the fastener so as to secure the fastener to the fixing. The head may comprise a chamfered portion configured to guide the fastener into the channel.

The channel may have a threaded surface for engaging a threaded portion of the fastener. The channel may have a circular profile.

The channel may extend through the body from the head to the distal end. The distal end of the body may be configured as a cantilever joint for engaging with the fastener. The distal end of the body may be configured as a plurality of cantilever joints for engaging with the fastener.

Viewed from a further aspect, the present invention provides an assembly comprising a panel and a fixing secured thereto.

### BRIEF DESCRIPTION OF THE DRAWINGS

Example embodiment(s) of the invention are illustrated in the accompanying drawings, in which:
**Figure 1** illustrates a lower perspective view of a fixing according to an embodiment;
**Figure 2** illustrates an exploded perspective view of an assembly including the fixing of Figure 1, and a pin;
**Figure 3** illustrates an exploded perspective view of an assembly including the fixing of Figure 1, and a screw;
**Figure 4** illustrates a lower perspective view of a fixing of Figure 1, inserted within a hole of a surface, such as a panel;
**Figure 5** illustrates a bottom view of the fixing of Figure 1;
**Figure 6** illustrates a bottom view of a fixing when inserted within a hole of a surface and coupled with a pin;
**Figure 7** illustrates (a) a bottom view and (b) a cross sectional view of the fixing of Figure 4, in a first configuration;
**Figure 8** illustrates (a) a bottom view and (b) a cross sectional view of the fixing of Figure 4, in a second configuration;
**Figure 9** illustrates an upper perspective view of the fixing of Figure 1;
**Figure 10** illustrates an exploded perspective view of an assembly including the fixing of Figure 4, and a pin;
**Figure 11** illustrates a representation of a surface in which the fixing of Figure 4 is inserted;
**Figure 12** illustrates an exploded lower perspective view an alternative embodiment of the fixing and a smooth pin member to be inserted through the pinch member of the fixing, and

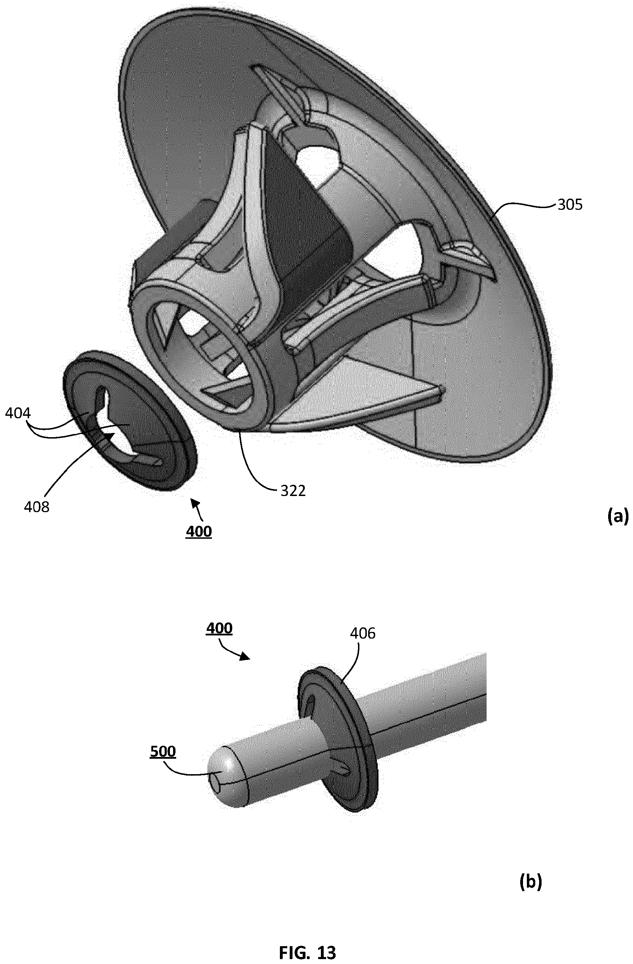

**Figure 13** illustrates (a) an exploded lower perspective view of the alternative fixing of Figure 12 and the pinch member, and (b) an exploded perspective view of the pinch member engaged with the smooth pin member (fixing not shown for clarity).

### DETAILED DESCRIPTION

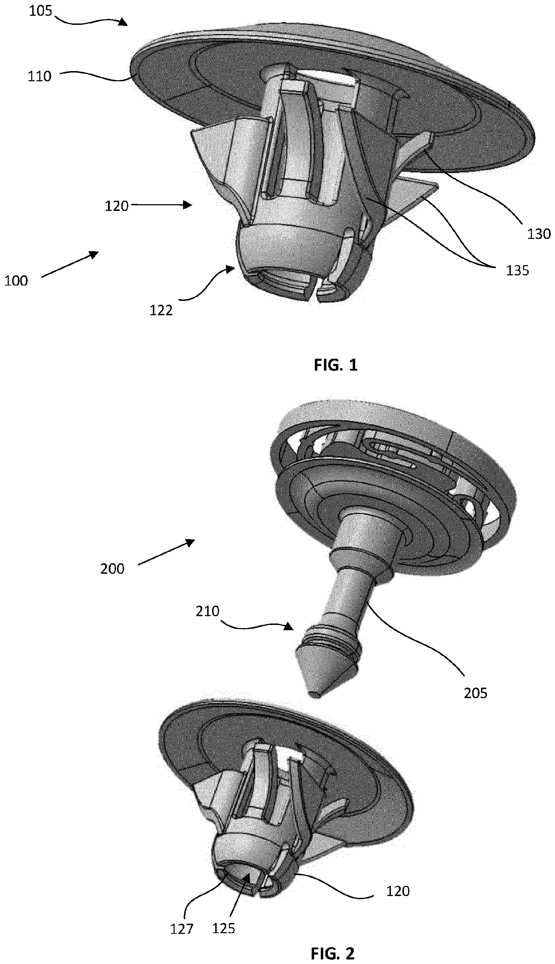

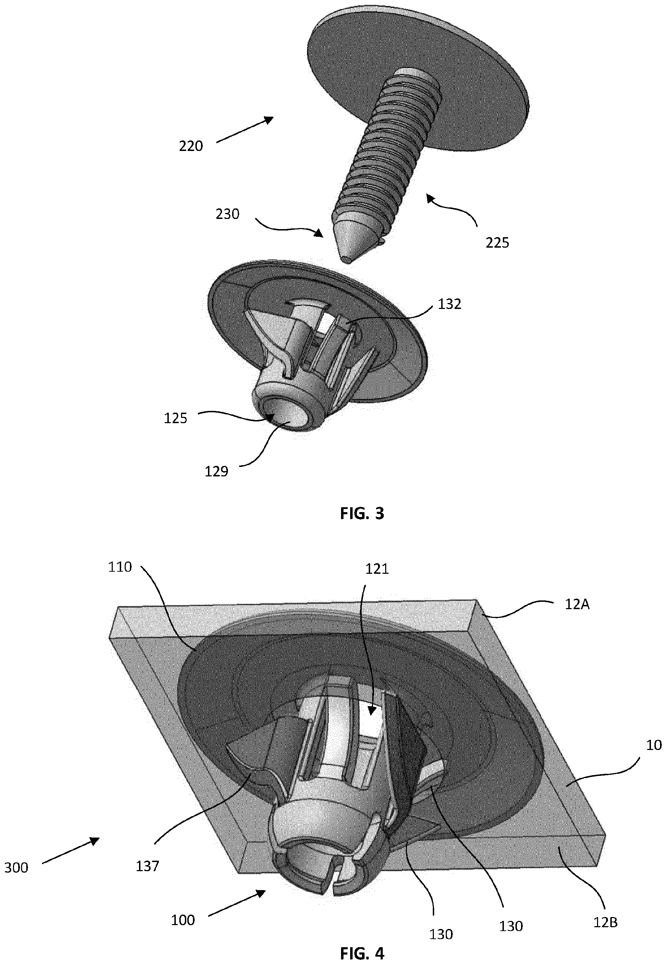

Figure 1 illustrates an exemplary fixing 100 having a head 105, a body 120 and a channel 125 for receiving at least a part of a corresponding pin 200 or screw counterpart 220 (see Figures 2 & 3). The pin 200 and screw counterparts 220 are exemplary fasteners that can be secured to the fixing 100. When assembled, the fastener 200, 220 and fixing 100 can be used to secure a part, such as a vehicle part, to a panel 10, such as a vehicle door panel. In one example, the fastener 200, 220 is secured to the part and the fixing 100 is secured to the panel as will be described below. The panel 10 illustrated in the Figures are shown partially transparent for clarity.

As shown in the Figures, the body 120 is connected to the head 105 and extends from the head 105 to a distal end 122 of the fixing 100. The channel 125 also extends through the entire length of the body 120, although this is not essential. In some cases, the channel 125 only extends partially through the body 120 or is not present at all. In some cases, the fixing 100 may be formed integrally with a panel or part.

It will be apparent that the fastener 200, 220 can be secured to the fixing 100 in a variety of ways. Two exemplary ways are illustrated in Figures 2 & 3.

In Figure 2, the body 120 has a distal end 122 configured as cantilever joints and a ridge 127 extending around the inner surface 129 for engaging with a corresponding end 210 of the fastener 200. The so formed cantilever joints mechanically engage with the distal end 210 of the fastener 200 to secure the fastener 200 to the fixing 100. The fastener 200 shown in Figure 2 includes a body 205 having a narrower section compared to the distal end 210. However, it would be apparent this is not essential to the present invention.

In Figure 3, the channel 125 has a threaded inner surface 129 (not shown) for engaging a corresponding threaded body 225 of the screw counterpart 220. In this case, the screw counterpart 220 is screwed into the fixing 100 to form the mechanical fixation between the fixing 100 and the fastener 200. Further, the body 120 of the fixing 100 is a single piece without a split distal end 122 forming the cantilever joints as is present in the exemplary fixing 100 shown in Figure 2. Where the channel 125 has a threaded inner surface 129, the body 120 can include a grommet (not shown). The grommet is preferably located at the distal end 122 of the body 120. Including a grommet in this way means that any interference between the legs 130 and the screw counterpart 220 would not be an issue during insertion of the screw counterpart 220. The grommet may be attached to the distal end 122 in any conventional way known in the art. It would be apparent that the same fixing may have a threaded inner surface 129 and a split distal end 122 in order to provide a fixing 100 that is compatible with multiple fasteners 200, 220.

The fixing 100 also includes three retaining arms 135 for securing the fixing 100 to the panel 10. The retaining arms 135 are resiliently deformable and bend as the fixing 100, specifically the body 120, is pressed through a hole 14 in the panel 10 (see Figure 4). Once the body 120 has been pressed sufficiently far into the hole 14, the retaining arms 135 can return to their original position to press against one side 12B of the panel 14. As shown in Figure 4, the head 105 also includes an abutting surface 110 for pressing against an opposed side 12A of the panel 10. The head 105 is preferably made from a resiliently deformable material. Thus, in combination, the head 105 and the retaining arms 135 secure the fixing 100 to the panel 10. By way of example, the fixing 100 may be inserted into the hole 14 with less than 30N of force. As a further example, the fixing 100 may provide a retention force greater than 150N. Thus, the present arrangement provides a convenient and secure fixing 100 for securing a component part to a panel 10.

As shown in the Figures, the retaining arms 135 extend from the body 120 and have a tapered profile, which narrows to a tip at the end of each retaining arm 135 away from the body 120. Each retaining arm 135 is also shown extending from the body 120 in a first direction and turning in a second direction relative to the first direction. Each of the retaining arms 135 also has an arcuate profile. A further feature of the retaining arms 135 is the angled bottom surface 137. Each of these features independently help to reduce the effort required to insert the fixing 100, as the tapered profile helps to guide the fixing 100 into the hole 14, the angled bottom surface 137 helps to encourage bending of the retaining arm 135 as it is pushed into the hole 14, and the tapered profile reduces the stiffness of each retaining arm 135 about an axis substantially parallel to a longitudinal axis of the fixing. By providing a narrowing profile away from the base of each retaining arm 135, the fixing 100 has increased retention strength compared to a non-tapered retaining arm. This is because the stiffness of the tapered retaining arm 135 in a direction perpendicular to the longitudinal direction of the fixing 100 is increased compared to the same direction a non-tapered retaining arm.

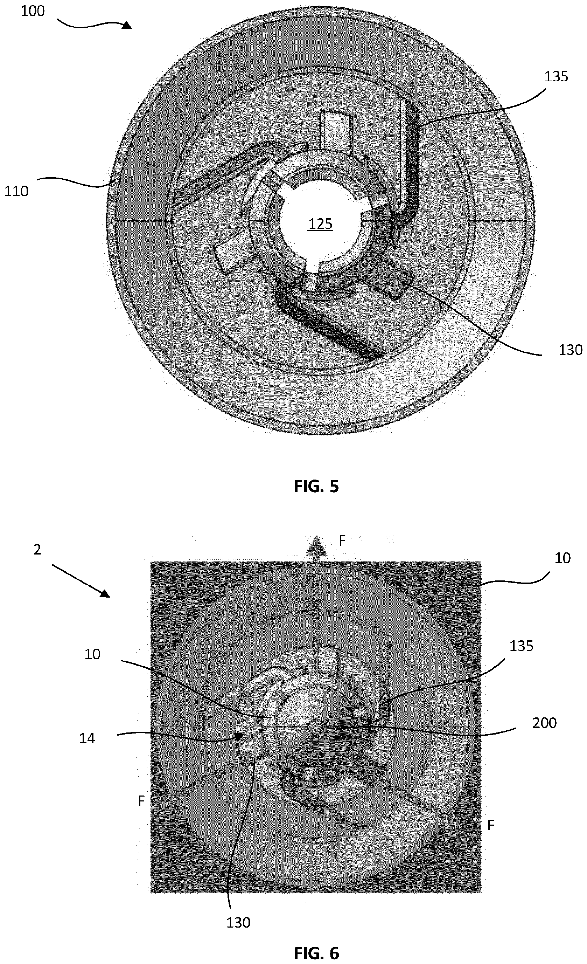

The retaining arm 135 may also have a flat top surface for pressing against the side 12B of the panel 10. The first portion of the retaining arm 135 that extends in the first direction is also shown extending substantially radially away from the centre of the body 120. The second portion of the retaining arm 135 forms an angle (different from 180°, such as for example, around 90°) with the first portion and extends away from the first portion in a different direction to the first portion. As shown in Figure 5, the second portion of each retaining arm 135 may extend in a substantially parallel direction to one of the resiliently deformable legs 130. However, it would be apparent this was not essential to the present invention.

While a round body 120 is shown in the Figures, it would be apparent this was merely exemplary and that a body having other cross-sectional profiles, such as an elliptical, or square or rectangular profile, would be suitable. Similarly, while three retaining arms 135 are shown, it would be apparent that fewer or more than three arms 135 may be suitable for the present invention. In some cases, only a single retaining arm 135 is required to provide the benefits of the present fixing 100. Similarly, while the retaining arms 135 are shown spaced equally around the perimeter of the body 120, it would be apparent this was not essential and that the two or more retaining arms 135 may be spaced unequally around the body 120. While it is preferable for each of the retaining arms 135 to be configured in the same way, it would be apparent that this was not essential and each of the retaining arms 135 may be configured in a different manner incorporating one or more of the features described above.

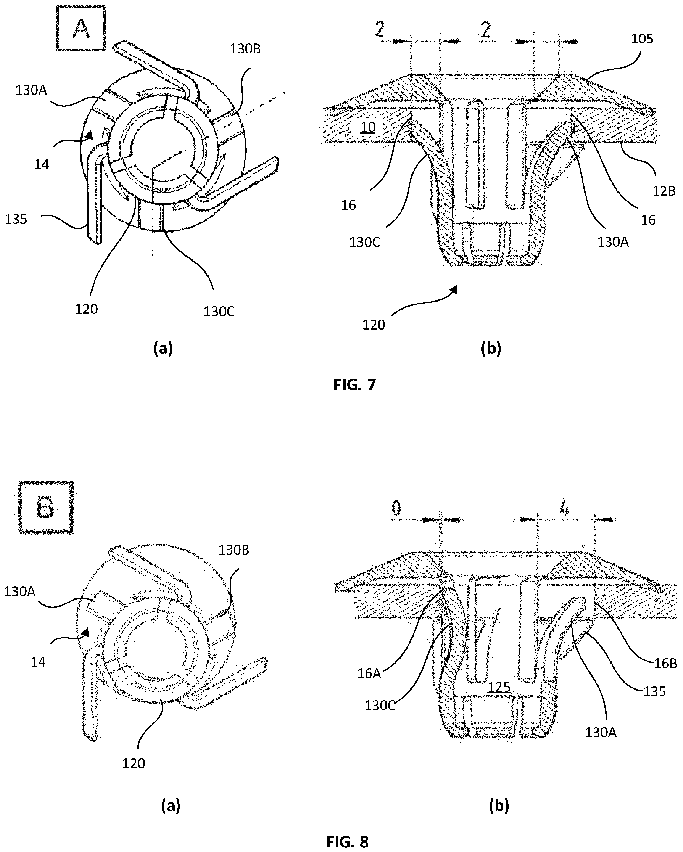

As shown in the Figures, the fixing 100 further includes three resiliently deformable legs 130 arranged to deform when moving the fixing 100 axially within the hole 14. Preferably, the one or more resiliently deformable legs 130 centre the body 120 within the hole 14 by pushing the body 120 in a lateral direction away from an inner surface 16 of the hole 14. The fixing 100 can therefore be considered as a self-centring fixing. The resiliently deformable legs 130 may be considered to be centring legs. As shown, the centring legs 130 extend radially from the body 120 and have an end surface 132 (see Figure 3) arranged to press against an inner surface 16 of the hole (see Figure 7). The centring legs 130 are biased outwardly from the body 120 so that they press against the inner surface 16 of the hole 14 as described below. Each centring leg 130 preferably extends in a parallel direction with a portion of a corresponding retaining arm 135 as shown in the Figures, but it would be apparent this was not essential.

As shown, the legs 130 extend towards the head 105 from a slot 121 formed in the side of the body 120 (see Figure 4). The legs 130 also have an arcuate profile such that the legs 130 curve outwardly from the body 120 and protrude beyond the outer surface of the body 120. The centring legs 130 are arranged to deform into the body 120 through the slot 121 and towards the channel 125. In some cases, the legs 130 deform into the channel 125. In some cases, the centring legs 130 only deform into the thickness of the body 120 (i.e. into the slot 121, but not into the channel 125 itself). However, in both cases, the legs 130 are designed not to interfere with the fixing 200, 220 during insertion of the fixing 200, 220 to avoid unnecessarily increasing the force required to insert the fixing 200, 220 into the fixing 100. Furthermore, the legs 130 are designed not to interfere with the fixing body 205, 215 once inserted within the channel 125. While three centring legs 130 are shown, it would be apparent fewer or more than three legs 130 may be used to centre the fixing 100 within the hole 14. A fixing having only one centring leg 130 would retain the self-centring functionality, as pushing the fixing 100 laterally in the hole 14 would deform the leg 130, which would apply a restorative force to push the fixing 100 away from the inner surface 16 of the hole 14 and back to the central position in the hole 14. Similarly, while the centring legs 130 are shown spaced equally around the perimeter of the body 120, it would be apparent this was not essential. Two or more centring legs 130 may be spaced unequally or equally around the body 120. While it is preferable for each of the centring legs 130 to be configured in the same way, it would be apparent that this was not essential and each of the legs 130 may be configured in a different manner incorporating one or more of the features described above. Similarly, while the same number of legs 130 and arms 135 are illustrated, it would be apparent this was not essential and that there may be more legs 130 than retaining arms 135 or more retaining arms 135 than legs 130.

The fixing 100 of the present application provides greatly increased tolerances on the final position of each individual fixing 100. For example, a part may be secured to a panel using a large number of fixings 100 and fasteners 200, 220 as described herein. However, ensuring each fixing 100 and each fastener 200, 220 is aligned requires very tight manufacturing tolerances through the manufacturing processes of the respective parts and panels so that the holes for each fastener 200, 220 and fixing 100 are located as accurately as possible. Poor placement of a single hole may prevent the entire panel from being fixed to the part. By providing a fixing 100 that can move within the hole 14, it is possible to provide, for example a tolerance of ±2mm on a 12mm diameter hole, which provides considerably greater flexibility in the location of each hole 14. It would be apparent that a tolerance of ±2mm could apply to other hole sizes. Similarly, it would be apparent that a tolerance of ±2mm was merely exemplary and that the tolerance may be greater or less than 2mm. As each fixing 100 is effectively under-sized for a given hole 14, it is also possible to use the same fixing 100 for holes of different sizes, thus reducing the number of different components needed to assemble the final product. This is achieved by the centring legs 130 providing a restorative force (F) on the fixing 100 as shown in Figure 6 and by the retaining arms 135 extending along the underside 12B of the panel 10 to ensure the fixing 100 remains secured to the panel 10 even if the fixing 100 is displaced laterally within the hole 14.

Figure 6 shows an assembly 2 where the fixing 100 is secured within a hole 14 in the panel 10 in a first configuration. As described above, the restorative force (F) provided by the centring legs 130 maintains the fixing 100 in a central position where the longitudinal axis of the body 120 is substantially coincident with the centre of the hole 14. In this first configuration, the body 120 is equally spaced from the inner surface 16 of the hole 14 by approximately 2mm (see Figure 7 (a), (b)) and each leg 130A, 130B, 130C is in contact with the inner surface 16 of the hole 14. Figure 7 may represent a pre-assembled configuration of a panel 10 having a fixing 100 secured therein and ready to receive a fastener 200, 220. Figure 7 may also represent an assembled configuration of a panel 10 secured to a part by a fastener 200, 220 where the part and fastener are omitted for clarity. In this latter case, the position 200, 220 of the fastener 200, 220 and hole 14 may be well-aligned and therefore deformation of the centring legs 130 is minimal or negligible.

Figures 8 (a), (b) illustrate the case where the fixing 100 is secured within the hole 14 in a second configuration. This second configuration may occur when the fastener 200, 220 is poorly-aligned with the hole 14, which results in the fastener 200, 220 pressing against the head 105 of the fixing 100 as it is inserted into the fixing 100. This results in a force being applied to the fixing 100 by the fastener 200, 220. However, due to the deformability of the legs 130, as the fastener 200, 220 is pressed into the channel 125, the fixing 100 is able to slide laterally within the hole 14. In the example illustrated in Figure 8, centring leg 130C deforms to allow the body 120 to be pressed against one side 16A of the hole 14 while the other centring legs 130A, 130B are spaced from other sides 16B of the hole 14. However, the fixing 100 is still held securing within the hole 14 due to the retaining arms 135 that extend beyond the extent of the centring legs 130.

As shown in Figure 8 (b), the 2mm tolerance provided by the present fixing allows the body 120 to have substantially zero gap with one side 16A of the hole 14, but with a 4mm gap on the other side 16B of the hole 14. Figure 8 also shows how centring leg 130C can deform into the channel 125. Figure 8 may represent an assembled configuration of a panel 10 secured to a part by a fastener 200, 220 where the part and fastener are omitted for clarity. Where the fastener 200 has a body 205 with a narrow section compared to the distal end 210, such as shown in Figure 2, this narrow section provides a recess for receiving the deformed leg 130C as the fastener 200 is secured to the fixing 100. However, it would be apparent that this was not essential, and the centring leg 130 may simply be straightened as it is pressed against the body 205, 225 of the fastener 200, 220 disposed within the channel 125. Upon removal of the fastener 200, 220, the lateral force from the fastener 200, 220 is no longer applied to the fixing 100 and the restorative force (F) applied by the centring legs 130 can return the fixing 100 from its offset position to its default central position within the hole 14.

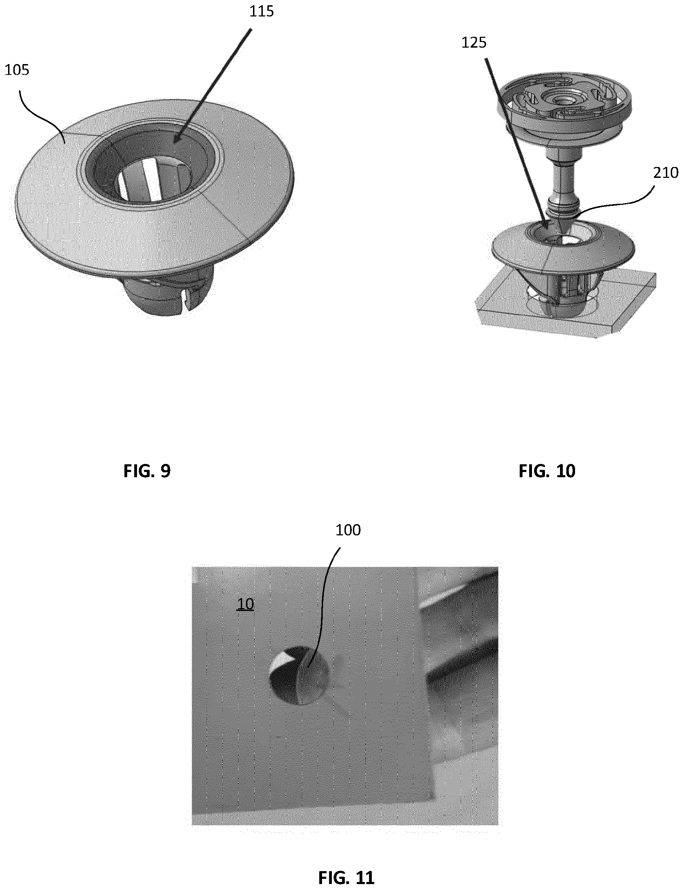

As shown in Figures 9 & 10, the head 105 includes a chamfered section 115 to guide the fastener 200, 220 into the channel 125. While the head 105 is illustrated with an annular profile having a chamfered inner surface 115 that joins the inner surface 129 of the body 120 it would be apparent this was not essential and other arrangements incorporating the chamfered section 115 could provide this function. The chamfered section 115 advantageously accommodates a variety of profiles of distal end 210, 230 which allows for different fasteners 200, 220 to be accommodated with the present fixing 100. Figure 11 illustrates an exemplary insertion process where a user is able to insert the fixing 100 into the panel 10 by a hand of a user.

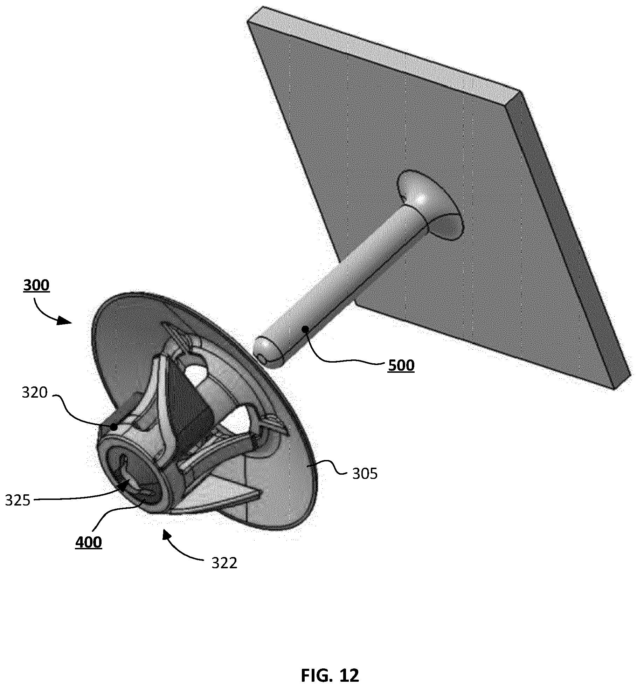

An alternative embodiment of the present invention is shown in Figures 11 and 12. Here, the fixing 300 is substantially identical to the fixing 100 of the previous embodiment, but comprises a pinch member 400 instead of, or in addition to the ridge 127 or threaded inner surface 129 (not shown) of fixing 100. The pinch member 400 may be provided at the distal end 320 inside the channel 325, where it is fixed to the body 320 (permanently or removably). The pinch member 400 is made of a resilient material, such as, for example, a resilient metal, and is configured to grippingly engage with a smooth pin 500 (e.g. a plastic fastener having a pin member with a smooth outer surface). In particular, the pinch member 400 has three teeth members 404 arranged circumferentially equidistantly spaced apart around a rim 406 of the pinch member 400 and protruding from the rim 406 away from the distal end 322 of the body 320 forming a frustoconical shape around an aperture 408. In use, the teeth members 404 are adapted to allow the smooth pin 500 to axially move through the aperture 408 when pushed in a direction from the head 305 towards the distal end 322 of the body 320, but retainingly "bite" into the softer smooth pin 500 when axially pulled back in a direction from the distal end 322 towards the head 305, so as to stop the pin 500 from being moved out of engagement with the fixing 300. It is understood by the person skilled in the art, that any suitable number of teeth members 404 may be used, and that the resilient material of the pinch member 400 may include any suitable material or composite.

Throughout the description and claims of this specification, the words "comprise" and "contain" and variations of them mean "including but not limited to", and they are not intended to (and do not) exclude other components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

## Claims

1. A fixing (100, 300) comprising:
a head (105, 305);
a body (120, 320) extending from the head (105, 305) to a distal end (122, 322) along a first axis;
a resiliently deformable retaining arm (135) configured to deform upon insertion of the body (120, 320) into a hole (14) of a panel (10), such that, in use, the head (105, 305) and the retaining arm (135) abut opposed first and second sides (12A, 12B) of the panel (10) so as to secure the fixing (100, 300) to the panel (10), and
a resiliently deformable leg (130) extending from a distal position (122) on the body (120, 320) towards the head (105, 305) and configured, in use, to abut an inner surface (16) of the hole (14) and biased to urge the fixing (100, 300) away from the inner surface (16),
wherein, upon application of a lateral force to the fixing (100, 300), the leg (130) is configured to deform to allow the body (120, 320) to move laterally within the hole (14).

2. A fixing according to claim 1, wherein the retaining arm (135) extends from the body (120, 320), and wherein the retaining arm (135) comprises a first portion extending in first direction and a second portion connected to the first portion and extending in a second direction different to the first direction.

3. A fixing according to claim 2, wherein the leg (130) extends from the body (120, 320) in a substantially parallel direction to the second direction.

4. A fixing according to any preceding claim, wherein the retaining arm (135) has a tapered profile that narrows away from the body (120, 320).

5. A fixing according to any preceding claim, comprising a plurality of resiliently deformable retaining arms (135).

6. A fixing according to claim 5, wherein the plurality of retaining arms (135) are spaced equally around the body (120, 320).

7. A fixing according to any preceding claim, wherein the leg (130) comprises an arcuate profile.

8. A fixing according to any preceding claim, wherein, upon application of a lateral force to the fixing (100, 300), the leg (130) is configured to deform into a channel (125, 325) to allow the body (120, 320) to move laterally within the hole (14).

9. A fixing according to any preceding claim, comprising a plurality of resiliently deformable legs (130).

10. A fixing according to claim 9, wherein the plurality of legs (130) are spaced equally around the body (120, 320).

11. A fixing according to any preceding claim, wherein the body (120, 320) comprises a channel (125, 325) for receiving at least part of a fastener (200, 220, 500), and wherein the body (120, 320) is configured to engage the fastener so as to secure the fastener to the fixing (100, 300).

12. A fixing according to claim 11, wherein the body (320) further comprises a pinch member (400) operably provided within the channel (325) and configured to retainingly engage with a fastener (500).

13. A fixing according to claim 11, wherein the head (105, 305) comprises a chamfered portion (115) configured to guide the fastener (200, 220, 500) into the channel (125, 325).

14. An assembly comprising a panel (10) and a fixing (100, 300) according to any preceding claim secured thereto.

## Patentansprüche

1. Befestigung (100, 300), aufweisend:
einen Kopf (105, 305);
einen Körper (120, 320), der sich entlang einer ersten Achse von dem Kopf (105, 305) zu einem distalen Ende (122, 322) erstreckt;
einen elastisch verformbaren Haltearm (135), der so konfiguriert ist, dass er sich beim Einführen des Körpers (120, 320) in ein Loch (14) in einer Platte (10) so verformt, dass der Kopf (105, 305) und der Haltearm (135) im Gebrauch an gegenüberliegenden ersten und zweiten Seiten (12A, 12B) der Platte (10) anliegen, um die Befestigung (100, 300) an der Platte (10) zu sichern, und
ein elastisch verformbares Bein (130), das sich von einer distalen Position (122) an dem Körper (120, 320) in Richtung des Kopfes (105, 305) erstreckt und so konfiguriert ist, dass es im Gebrauch an einer Innenfläche (16) des Lochs (14) anliegt und vorgespannt ist, um die Befestigung (100, 300) von der Innenfläche (16) weg zu drücken,
wobei das Bein (130) so konfiguriert ist, dass es sich bei Einwirkung einer seitlichen Kraft auf die Befestigung (100, 300) verformt, um es dem Körper (120, 320) zu ermöglichen, sich in dem Loch (14) seitlich zu bewegen.

2. Befestigung nach Anspruch 1, wobei sich der Haltearm (135) von dem Körper (120, 320) aus erstreckt und wobei der Haltearm (135) einen ersten Abschnitt, der sich in eine erste Richtung erstreckt, und einen zweiten Abschnitt aufweist, der mit dem ersten Abschnitt verbunden ist und sich in eine zweite Richtung erstreckt, die sich von der ersten Richtung unterscheidet.

3. Befestigung nach Anspruch 2, wobei sich das Bein (130) von dem Körper (120, 320) in einer im Wesentlichen parallelen Richtung zu der zweiten Richtung erstreckt.

4. Befestigung nach einem der vorhergehenden Ansprüche, wobei der Haltearm (135) ein sich verjüngendes Profil aufweist, das sich von dem Körper (120, 320) weg verjüngt.

5. Befestigung nach einem der vorhergehenden Ansprüche, die eine Vielzahl von elastisch verformbaren Haltearmen (135) aufweist.

6. Befestigung nach Anspruch 5, wobei die Vielzahl von Haltearmen (135) gleichmäßig um den Körper (120, 320) herum beabstandet ist.

7. Befestigung nach einem der vorhergehenden Ansprüche, wobei das Bein (130) ein bogenförmiges Profil aufweist.

8. Befestigung nach einem der vorhergehenden Ansprüche, wobei das Bein (130) so konfiguriert ist, dass es sich bei Einwirkung einer seitlichen Kraft auf die Befestigung (100, 300) in einen Kanal (125, 325) verformt, um es dem Körper (120, 320) zu ermöglichen, sich in dem Loch (14) seitlich zu bewegen.

9. Befestigung nach einem der vorhergehenden Ansprüche, die eine Vielzahl von elastisch verformbaren Beinen (130) aufweist.

10. Befestigung nach Anspruch 9, wobei die Vielzahl von Beinen (130) gleichmäßig um den Körper (120, 320) herum beabstandet ist.

11. Befestigung nach einem der vorhergehenden Ansprüche, wobei der Körper (120, 320) einen Kanal (125, 325) zur Aufnahme zumindest eines Teils eines Befestigungsmittels (200, 220, 500) aufweist und wobei der Körper (120, 320) so konfiguriert ist, dass er mit dem Befestigungsmittel in Eingriff kommt, um das Befestigungsmittel an der Befestigung (100, 300) zu befestigen.

12. Befestigung nach Anspruch 11, wobei der Körper (320) ferner ein Klemmelement (400) aufweist, das betriebsbereit innerhalb des Kanals (325) vorgesehen und so konfiguriert ist, dass es mit einem Befestigungsmittel (500) in haltendem Eingriff steht.

13. Befestigung nach Anspruch 11, wobei der Kopf (105, 305) einen abgeschrägten Abschnitt (115) aufweist, der so konfiguriert ist, dass er das Befestigungsmittel (200, 220, 500) in den Kanal (125, 325) führt.

14. Anordnung, die eine Platte (10) und eine daran befestigte Befestigung (100, 300) nach einem der vorhergehenden Ansprüche aufweist.

## Revendications

1. Fixation (100, 300) comprenant :
une tête (105, 305) ;
un corps (120, 320) s'étendant à partir de la tête (105, 305) jusqu'à une extrémité distale (122, 322) le long d'un premier axe ;
un bras de retenue élastiquement déformable (135) configuré pour se déformer lors de l'insertion du corps (120, 320) dans un trou (14) d'un panneau (10), de sorte que, en utilisation, la tête (105, 305) et le bras de retenue (135) viennent en butée contre des premier et deuxième côtés opposés (12A, 12B) du panneau (10) de manière à fixer la fixation (100, 300) au panneau (10), et
une patte déformable élastiquement (130) s'étendant à partir d'une position distale (122) sur le corps (120, 320) vers la tête (105, 305) et configurée, en utilisation, pour venir en butée contre une surface interne (16) du trou (14) et sollicitée pour pousser la fixation (100, 300) à l'écart de la surface interne (16),
dans lequel, lors de l'application d'une force latérale à la fixation (100, 300), la patte (130) est configurée pour se déformer pour permettre au corps (120, 320) de se déplacer latéralement à l'intérieur du trou (14) .

2. Fixation selon la revendication 1, dans laquelle le bras de retenue (135) s'étend à partir du corps (120, 320), et dans laquelle le bras de retenue (135) comprend une première partie s'étendant dans une première direction et une deuxième partie reliée à la première partie et s'étendant dans une deuxième direction différente de la première direction.

3. Fixation selon la revendication 2, dans laquelle la patte (130) s'étend à partir du corps (120, 320) dans une direction sensiblement parallèle à la deuxième direction.

4. Fixation selon l'une quelconque des revendications précédentes, dans laquelle le bras de retenue (135) a un profil effilé qui se rétrécit en s'éloignant du corps (120, 320).

5. Fixation selon l'une quelconque des revendications précédentes, comprenant une pluralité de bras de retenue élastiquement déformables (135).

6. Fixation selon la revendication 5, dans laquelle la pluralité de bras de retenue (135) sont espacés de manière égale autour du corps (120, 320).

7. Fixation selon l'une quelconque des revendications précédentes, dans laquelle la patte (130) comprend un profil arqué.

8. Fixation selon l'une quelconque des revendications précédentes, dans laquelle, lors de l'application d'une force latérale à la fixation (100, 300), la patte (130) est configurée pour se déformer dans un canal (125, 325) pour permettre au corps (120, 320) de se déplacer latéralement à l'intérieur du trou (14) .

9. Fixation selon l'une quelconque des revendications précédentes, comprenant une pluralité de pattes élastiquement déformables (130).

10. Fixation selon la revendication 9, dans laquelle la pluralité de pattes (130) sont espacées de manière égale autour du corps (120, 320).

11. Fixation selon l'une quelconque des revendications précédentes, dans laquelle le corps (120, 320) comprend un canal (125, 325) pour la réception d'au moins une partie d'un élément de fixation (200, 220, 500), et dans laquelle le corps (120, 320) est configuré pour engager l'élément de fixation de manière à fixer l'élément de fixation à la fixation (100, 300).

12. Fixation selon la revendication 11, dans laquelle le corps (320) comprend en outre un élément de pincement (400) fourni de manière opérationnelle à l'intérieur du canal (325) et configuré pour s'engager de manière retenue avec un élément de fixation (500) .

13. Fixation selon la revendication 11, dans laquelle la tête (105, 305) comprend une partie chanfreinée (115) configurée pour guider l'élément de fixation (200, 220, 500) dans le canal (125, 325) .

14. Ensemble comprenant un panneau (10) et une fixation (100, 300) selon l'une quelconque des revendications précédentes y étant rattachées.
